(19) Europäisches Patentamt
European Patent Office
Office européen des brevets

(11) **EP 4 065 256 B1**

## (12) FASCICULE DE BREVET EUROPEEN

(45) Date de publication et mention de la délivrance du brevet:
**22.10.2025   Bulletin 2025/43**

(21) Numéro de dépôt: **20821354.6**

(22) Date de dépôt: **24.11.2020**

(51) Classification Internationale des Brevets (IPC):
**B01D 63/16** *(2006.01)*     **B01D 65/02** *(2006.01)*
**B01D 63/06** *(2006.01)*     **B01D 61/18** *(2006.01)*

(52) Classification Coopérative des Brevets (CPC):
**B01D 63/06; B01D 61/18; B01D 63/16; B01D 65/02;** B01D 2315/04; B01D 2321/2058; B01D 2323/56

(86) Numéro de dépôt international:
**PCT/FR2020/052166**

(87) Numéro de publication internationale:
**WO 2021/105609 (03.06.2021 Gazette 2021/22)**

(54) **DISPOSITIF DE FILTRATION DE LIQUIDE COMPRENANT UN MODULE D'ÉMISSION D'ULTRASONS**

FLÜSSIGFILTERVORRICHTUNG MIT ULTRASCHALL MODUL

LIQUID FILTRATION APPARATUS WITH AN ULTRASONIC MODUL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **26.11.2019   FR 1913226**

(43) Date de publication de la demande:
**05.10.2022   Bulletin 2022/40**

(73) Titulaires:
• **Université Grenoble Alpes
38400 Saint Martin d'Hères (FR)**
• **Institut Polytechnique de Grenoble
38000 Grenoble (FR)**
• **Centre national de la recherche scientifique
75016 Paris (FR)**

(72) Inventeurs:
• **HENGL, Nicolas
31180 CASTELMAUROU (FR)**
• **PIGNON, Frédéric
38000 GRENOBLE (FR)**
• **GONDREXON, Nicolas
MEYLAN 38240 (FR)**
• **BAUP, Stéphane
73000 CHAMBÉRY (FR)**
• **JIN, Yao
CHENGDU, Sichuan 610000 (CN)**

(74) Mandataire: **Novaimo
Europa 1
362, avenue Marie Curie
Archamps Technopole
74166 Saint-Julien-en-Genevois Cedex (FR)**

(56) Documents cités:
FR-A1- 2 789 331          US-A- 4 253 962
US-A1- 2009 101 576      US-A1- 2013 112 620

## Description

### Domaine technique

La présente invention se rapporte à un dispositif de filtration (D) de liquides comprenant un module de filtration (F) et un module d'émission d'ultrasons (US).

En particulier, la présente invention se rapporte à un dispositif de filtration (D) de liquides comprenant un module de filtration (F) et un module d'émission d'ultrasons (US) fixé distant au module de filtration.

La présente invention trouve une application notamment dans les domaines industriels impliquant une filtration de liquides, par exemple dans le domaine agroalimentaire, dans le domaine médical, dans le domaine vétérinaire, dans le domaine automobile, dans les domaines de micro ou ultrafiltration, dans le domaine de traitement et/ou filtration des eaux, notamment des eaux industrielles, le dessalement, dans le domaine de traitement et/ou filtration des boues, dans le domaine biologique, dans le domaine du traitement et/ou de la filtration de solutions et/ou milieux biologique, dans le domaine du traitement et/ou de la filtration de solution et/ou milieu issus de réacteur biologique.

Dans la description ci-dessous, les références entre crochets ([]) renvoient à la liste des références présentée à la fin du texte.

### Etat de la technique

La filtration utilisant des membranes ou filtration membranaire est un procédé / méthode utilisé de manière usuelle dans différents domaines industriels, par exemple agroalimentaire, médical etc. Différents procédés de filtration sont utilisés pour la filtration membranaire utilisant différent type/catégorie de membrane. Par exemple, la microfiltration tangentielle (MFT) est un procédé utilisant des membranes macroporeuses comprenant des pores de taille variable de l'ordre du micron. Les membranes utilisées peuvent être de différentes natures, par exemple en céramique, en polymère organique, en acier inox, par exemple revêtu dioxyde de titane. Un autre exemple de procédé de filtration est l'ultrafiltration (UF) qui est un procédé membranaire permettant l'extraction du solvant et des solutés, par exemple ioniques ou moléculaires d'une solution contenant des macrosolutés, les membranes utilisées ont des tailles de pores variable de l'ordre du nanomètre. La nanofiltration (NF) est un autre procédé de filtration membranaire avec des membranes dont le diamètre des pores est voisin du nanomètre. En outre, l'osmose inverse (RO) un procédé de filtration membranaire utilisant des membranes denses permettant, par exemple d'extraire de l'eau pure d'une solution contenant des sels et/ou des substances dissoutes.

Toutefois, les procédés de filtration utilisant des membranes présentent des variations dans les rendements de filtrations et/ou dans la capacité de filtration. En particulier, les pores des membranes peuvent présenter une altération de structure au court du temps, par exemple due à l'obturation des pores des membranes et/ou à tout phénomène susceptible de modifier les propriétés desdites membranes. Ces modifications diminuent ainsi les rendements de filtration et/ou peuvent conduire au remplacement des membranes.

Aussi, il existe un réel besoin de trouver un moyen permettant de conserver une efficacité de filtration constante dans le temps et/ou de restaurer les propriétés des membranes.

Afin de nettoyer les membranes et/ou de déboucher les pores des membranes filtrantes et/ou d'intensifier les procédés de filtrations, l'utilisation d'ultrasons a été étudié. En particulier, l'utilisation d'ultrasons a été envisagée pour intensifier les procédés de séparation membranaire (Okahata and Noguchi, 1983 [1]), dans des procédés de rinçage des membranes (Ahmad et al., 2012 [2]; Chai et al., 1999 [3];Gonzalez-Avila et al., 2012 [4]; Lamminen et al., 2006 [7]) ou dans le contrôle du colmatage des membranes (Ahmad et al., 2012 [2]; Mirzaie and Mohammadi, 2012 [5]; Muthukumaran et al., 2007 [6]). En particulier, les ultrasons ont été utilisés pour le nettoyage des membranes off line, et contrôle du colmatage in situ durant le procédé de procédé. US 2013/112620 A1, US 2009/101576 A1, US 4 253 962 A, et FR 2 789 331 A1 montrent des documents de brevets pertinents.

Toutefois afin de nettoyer les membranes, il est nécessaire de sortir/séparer les membranes du dispositif de filtration et de les disposer dans un bain à ultrasons. En d'autres termes le « nettoyage » implique l'arrêt de la filtration, un démontage du dispositif de filtration, une manipulation de la membrane, un traitement de la membrane dans un bain à ultrasons etc., impliquant un arrêt de la filtration pendant un temps important et une altération potentielle du dispositif et/ou de la membrane de par les nombreuses manipulations requises.

Par ailleurs, afin de contrôler le colmatage des membranes, notamment l'obturation des pores, l'immersion des dispositifs de filtration et/ou du module membranaires desdits dispositifs de filtration dans un bain et/ou bac à ultrasons a été étudier. Toutefois, la mise en place de cette configuration implique la mise en place d'une structure très particulière avec un montage particulier du dispositif qui est incompatible avec une utilisation permanente et/ou une utilisation industrielle dispositif de filtration. En outre, dans cette configuration, la puissance des ultrasons est très atténuée et l'utilisation dans un procédé industriel est incompatible avec les rendements attendus et l'encombrement résultant.

Il existe donc un réel besoin de trouver un dispositif et/ou moyen palliant ces défauts, inconvénients et obstacles de l'art antérieur, en particulier d'un dispositif et/ou moyen permettant de maîtriser les procédés de filtrations membranaires, leurs efficacités tout en réduisant les coûts et/la complexité des dispositifs de filtration membranaire et/ou la taille/l'encombrement spatial desdits dispositifs de filtration.

## Description de l'invention

La présente invention est décrite par l'objet des revendications 1 à 8.

La présente invention permet de résoudre les inconvénients et obstacles de l'art antérieur en fournissant un dispositif de filtration (D) de liquides, comprenant un module de filtration (F) et un module d'émission d'ultrasons (US), caractérisé en ce que le module d'émission d'ultrasons est fixé distant au module de filtration par un moyen de fixation (MF), et le module d'émission d'ultrasons est muni coaxialement d'une masselotte (P), le module de filtration et le module d'ultrasons muni de sa masselotte entrant en résonance via le moyen de fixation lorsque le module d'émission d'ultrasons émet des ultrasons.

La présente invention permet de résoudre les inconvénients et obstacles de l'art antérieur en fournissant un dispositif de filtration (D) de liquides, comprenant un module de filtration (F) s'étendant selon un premier axe (A1) et un module d'émission d'ultrasons (US), caractérisé en ce que le module d'émission d'ultrasons (US) est fixé distant au module de filtration (F) par un moyen de fixation (MF), et le module d'émission d'ultrasons (US) est muni perpendiculairement à un deuxième axe (A2) de deux masselottes (P1, P2) opposées agencées de part et d'autre du deuxième axe (A2) du module d'émission d'ultrasons (US), le module d'émission d'ultrasons et la masselotte étant liés l'un à l'autre par un élément de liaison (EL) en forme de croix, les deux masselottes s'étendant coaxialement selon un troisième axe (A3) perpendiculaire au deuxième axe (A2) du module d'émission d'ultrasons, le troisième axe (A3) étant sensiblement parallèle au premier axe (A1),le module de filtration et le module d'ultrasons muni de ses deux masselottes (P1 , P2) entrant en résonance via le moyen de fixation (MF) lorsque le module d'émission d'ultrasons émet des ultrasons, la fréquence d'émission des ultrasons étant comprise entre 20 et 100 kHz.

Les inventeurs ont démontré de manière surprenante que le dispositif selon l'invention, comprenant un module d'émission d'ultrasons est fixé distant au module de filtration par un moyen de fixation (MF), et le module d'émission d'ultrasons est muni coaxialement d'une masselotte (P) permet une mise en vibration dudit module de filtration. En particulier, les inventeurs ont démontré de manière surprenante que le dispositif selon l'invention présente des capacités et/ou rendement et/ou efficacité de filtration supérieur au dispositif ne comprenant pas de module d'émission d'ultrasons muni coaxialement d'une masselotte (P) et permet avantageusement d'augmenter les performances de filtration de manière très significative.

En outre, les inventeurs ont démontré que le dispositif selon l'invention comprenant un module d'émission d'ultrasons muni coaxialement d'une masselotte (P) ou perpendiculairement d'au moins une masselotte (P1, P2) permet avantageusement la propagation des vibrations ou ondes ultrasonores dans le module de filtration.

En outre, les inventeurs ont démontré, que le dispositif selon l'invention présentant des propriétés et capacités de filtrations améliorées par rapport aux dispositifs connus, permet avantageusement de pouvoir réduire la surface des membranes filtrantes et/ou leurs nombres tout en conservant la même efficacité de filtration et/ou un rendement identique et/ou une efficacité et/ou rendement de filtration stable et homogène dans le temps.

En outre, avantageusement la réduction possible notamment de la surface des membranes filtrantes et/ou leurs nombres permet avantageusement de réduire les coûts de production et/ou d'exploitation desdits dispositifs sans modification des capacités et/ou efficacité et/ou rendement de filtration desdits dispositifs.

Dans la présente par « liquide » on entend tout liquide connu de l'homme du métier ou tout liquide cavitant. Il peut s'agir de toute solution, milieu, fluide, émulsion, composition connu de l'homme du métier. Il peut s'agir par exemple de tout liquide présent dans la nature connue de l'homme du métier et/ou de tout liquide susceptible d'être produit par l'homme. Il peut s'agir par exemple d'un liquide biologique, par exemple tout liquide biologique connu de l'homme du métier, par exemple du sang, du sérum, du liquide céphalorachidien, du mucus, de l'urine. Il peut s'agir par exemple d'un liquide pour utilisation pharmaceutique et/ou susceptible d'être administré à un mammifère, par exemple tout liquide pour utilisation pharmaceutique connu de l'homme du métier, par exemple une composition vaccinale, une composition adjuvante, une solution pour injection, du sérum physiologique. Il peut s'agir par exemple d'un liquide pour utilisation cosmétique, par exemple de tout liquide pour utilisation cosmétique connu de l'homme du métier, par exemple une composition capillaire, topique, une huile, un extrait végétal. Il peut s'agir par exemple d'un liquide issu d'un bâtiment, par exemple de tout liquide et/ou solution vicié issu d'un bâtiment. Il peut s'agir, par exemple, d'eaux usées issues des sanitaires, d'un liquide contenant un contaminant par exemple un métal, par exemple du plomb, du nickel, une substance polluante, par exemple des nitrates, des sels. Il peut s'agir par exemple d'un liquide agroalimentaire, par exemple de tout liquide et/ou composition agroalimentaire connu de l'homme du métier, par exemple de l'eau, des boissons, des jus de fruits et/ou légumes, du lait, des soupes, une boisson alcoolique, une boisson alcoolisée. Il peut s'agir par exemple d'un liquide issu et/ou transformé par l'industrie chimique, par exemple de tout liquide et/ou composition issu de l'industrie chimique connu de l'homme du métier, par exemple de tout liquide issu du pétrole, par exemple de l'essence, du gasoil, du mazout, de composition comprenant des polymères, de peintures.

Dans la présente, par coaxial ou coaxialement on entend agencé sur un même axe, ayant un même axe, ou étant alignés sur un axe commun.

Dans la présente, par module de filtration on entend tout module de filtration connu de l'homme du métier. Il peut s'agir par exemple de tout module de filtration disponible dans le commerce. Il peut s'agir par exemple de tout module de filtration de liquides disponible dans le commerce. Il peut s'agir par exemple d'un module de filtration commercialisé par la société TAMI INDUSTRIES, Beko Technologies, Fisher Scientific, Orélis environnement, SIVA, TIA, NOVASEP, PALL, POLYMEM, PENTAIR.

Selon l'invention, le module de filtration peut être de toute forme adaptée connu de l'homme du métier. Il peut se présenter par exemple sous une forme choisie dans le groupe comprenant un tube, un cylindre, un tube plat, un tube ondulé sur sa longueur et/ou sa largeur, un panneau creux, une sphère, un cube, un parallélépipède rectangle, une spirale, parallélépipède rectangle avec des bords arrondis, une forme creuse sans arrête vive. De préférence, le module de filtration est de forme tubulaire

Selon l'invention, le module de filtration peut être tout module adapté pour la micro et/ou ultrafiltration de liquides tels que décrits ci-dessus. Il peut s'agir de module de filtration adapté pour la mise en œuvre de membranes céramiques tubulaires pour de la micro, ultrafiltration de liquides tel que décrits ci-dessus.

Selon l'invention, le module de filtration peut comprendre au moins un filtre. Par exemple, le module de filtration peut comprendre de 1 à 10 filtres, par exemple de 1 à 7 filtres.

Selon l'invention, le module de filtration peut s'étendre selon un premier axe (A1). Par exemple lorsque le module de filtration est tubulaire, l'axe A1 correspond à la longueur du module de filtration.

Selon l'invention, le module de filtration peut comprendre tout filtre connu de l'homme du métier adapté. Il peut s'agir par exemple de tout filtre pour liquide connu de l'homme du métier. Il peut s'agir par exemple d'un filtre céramique, d'un filtre polymérique, d'une membrane à fibres creuses en polymère, de membrane céramique, de membranes métalliques.

Selon l'invention, le filtre peut comprendre des pores de 1 nanomètre à 1 mm.

Selon l'invention, le filtre peut comprendre des pores adaptés pour la mise en œuvre de procédés de filtration, par exemple membranaires à filtration simples.

Selon l'invention, le filtre céramique peut être tout filtre céramique connu de l'homme du métier. Il peut s'agir par exemple de filtre céramique disponible dans le commerce, par exemple commercialisé par la société TAMI INDUSTRIES sous la référence commerciale INSIDE CERAM d'un diamètre de 2,5 cm environ. Selon l'invention, le filtre céramique peut comprendre des pores de 10 nm à 1$\mu$m.

Selon l'invention, le filtre polymérique peut être tout filtre polymérique connu de l'homme du métier. Il peut s'agir par exemple de filtre polymérique disponible dans le commerce, par exemple commercialisé par la société POLYMEM sous la référence commerciale PVDF KYNAR. Selon l'invention, le filtre polymérique peut comprendre des pores de 1 nanomètre à 100$\mu$m, de 10 nm à 50$\mu$m.

Selon l'invention, la membrane à fibres creuses en polymère peut être toute membrane à fibres creuses en polymère connue de l'homme du métier. Il peut s'agir par exemple d'une membrane à fibres creuses disponible dans le commerce. Selon l'invention, le filtre polymérique peut comprendre des pores de 1 nanomètre à 100$\mu$m, de 10 nm à 50$\mu$m.

Selon l'invention, la membrane céramique peut être toute membrane céramique connue de l'homme du métier. Il peut s'agir par exemple d'une membrane céramique disponible dans le commerce. Il peut s'agir par exemple d'une membrane céramique commercialisée par la société Alsys group sous la référence Membrane BX d'un diamètre de 25mm. Selon l'invention, la membrane céramique peut comprendre des pores de 1 nm à 10 $\mu$m.

Dans la présente par module d'émission d'ultrasons on entend tout module d'émissions d'ultrasons connue de l'homme du métier. Il peut s'agir par exemple d'un module d'émissions d'ultrasons disponible dans le commerce, par exemple commercialisé par la société Sonodis. Il peut s'agir par exemple de tout émetteur d'ultrasons et/ou de tout générateur d'ultrasons et/ou de tout dispositif permettant l'émission d'ultrasons connu(s) de l'homme du métier. Selon l'invention la fréquence d'émission des ultrasons peut être comprise de 16 000 et 500 000 Hz, par exemple de 20 à 100 kHz, par exemple de 20 à 35 kHz. Selon l'invention les ultrasons peuvent être des ultrasons de basse fréquence, par exemple avec une fréquence comprise de 16 000 à 100 000 Hz. L'homme du métier, de part ces connaissances générales saura adapter la fréquence des ultrasons en fonction du liquide à filtrer.

Dans la présente par masselotte on entend toute masse adaptée connue de l'homme du métier. Il peut s'agir de toute masse ou masselotte susceptible d'être liée coaxialement avec un module d'émission d'ultrasons. Il peut s'agir également de toute masse ou masselotte susceptible d'être liée perpendiculairement avec un module d'émission d'ultrasons.

Selon l'invention, la masselotte peut être de toute forme adaptée connue de l'homme du métier. Elle peut se présenter par exemple sous une forme choisie dans le groupe comprenant un tube, un cylindre, un cône, un tube plat, un tube ondulé sur sa longueur et/ou sa largeur, un panneau creux, une sphère, un cube, un parallélépipède rectangle, une spirale, parallélépipède rectangle avec des bords arrondis, une forme creuse sans arrête vive, une cloche, de forme tronc conique De préférence, la masselotte est de forme conique et/ou tronc conique.

Selon l'invention, lorsque la masselotte est de forme conique ou tronconique, la hauteur du cône peut être comprise entre 5 et 15.cm, par exemple entre 8 et 15 cm.

Selon l'invention, lorsque la masselotte est de forme conique ou tronconique, le diamètre du cône peut être compris entre 1 et 5 cm, par exemple entre 2 et 3 cm.

Selon l'invention, lorsque la masselotte est de forme tronconique, la hauteur du tronc de cône peut être comprise entre 5 et 15 cm, par exemple entre 8 et 15 cm.

Selon l'invention, lorsque la masselotte est de forme tronconique, le diamètre peut être compris entre 1 et 5 cm, par exemple entre 2 et 3 cm.

Selon l'invention, le poids de la masselotte peut être compris de 200 à 6000g. Par exemple, le poids de la masselotte peut être compris de 500g à 6000g, de 3000g à 6000g, de 500g à 1000g.

Selon l'invention, le poids de la masselotte peut être compris de 200g à 2000g, de préférence de 500g à 1000g.

Selon l'invention, lorsque le dispositif comprend une pluralité de masselottes, la forme de chacune desdites masselottes peut être indépendamment identique ou différente, de préférence identique.

Selon l'invention, lorsque le dispositif comprend une pluralité de masselottes, le poids de chacune desdites masselottes peut être indépendamment identique ou différent, de préférence identique.

Selon l'invention, le poids de la masselotte peut être adapté à la fréquence d'émission des ultrasons. Par exemple pour une fréquence d'émission d'ultrasons de 35 kHz, le poids de la masselotte peut être compris de 500g à 1000g. Par exemple pour une fréquence d'émission d'ultrasons de 20 kHz, le poids de la masselotte peut être compris de 3000g à 6000g.

Selon l'invention, le module d'émission d'ultrasons et la masselotte peuvent être liés directement l'un à l'autre ou par un élément de liaison.

Selon l'invention, le module d'émission d'ultrasons et la masselotte peuvent être liés coaxialement directement l'un à l'autre ou par un élément de liaison (EL).

Selon l'invention, le module d'émission d'ultrasons, muni coaxialement d'une masselotte, s'étend selon un deuxième axe (A2).

Selon l'invention, le deuxième axe (A2) peut être sensiblement parallèle au premier axe (A1). Par exemple, l'angle formé par le premier axe (A1) et le deuxième axe (A2) peut être compris de 0 à 15 degré(s). De préférence, l'angle formé par le premier axe (A1) et le deuxième axe (A2) peut être égale à 0 degré, le premier axe et le second axe étant alors strictement parallèles.

Par exemple, lorsque le module d'émission d'ultrasons et la masselotte sont liés coaxialement par un élément de liaison, il peut s'agir par exemple de tout élément de liaison susceptible de lier un module d'émission d'ultrasons et une masselotte connu de l'homme du métier et/ou disponible dans le commerce. Selon l'invention l'élément de liaison peut être de toute taille et/ou forme adaptée pour une fixation à un module d'émission d'ultrasons et/ou à une masselotte.

Selon l'invention la taille de l'élément de liaison peut être telle qu'il permet, après fixation coaxialement d'un module d'émission d'ultrasons et d'une masselotte, un espace entre le module d'émission d'ultrasons et d'une masselotte compris entre 2 et 5 cm.

Selon l'invention, le module d'émission d'ultrasons peut être muni, perpendiculairement à son axe, d'au moins une masselotte (P).

Selon l'invention, le module d'émission d'ultrasons et la masselotte peuvent être liés perpendiculairement directement l'un à l'autre ou par un élément de liaison (EL).

Selon l'invention, lorsque le module d'émission d'ultrasons est muni perpendiculairement d'au moins une masselotte, la masselotte peut s'étendre selon un troisième axe (A3) et le module d'émission d'ultrasons selon son deuxième axe (A2).

Selon l'invention, le module d'émission d'ultrasons peut être muni perpendiculairement d'au moins deux masselottes, notamment de deux masselottes opposées. Selon l'invention, lorsque le module d'émission d'ultrasons est muni perpendiculairement de deux masselottes, lesdites deux masselottes peuvent s'étendre coaxialement selon le troisième axe (A3) perpendiculaire au deuxième axe (A2) du module d'émission d'ultrasons.

Selon l'invention le troisième axe (A3) formé par ladite au moins une masselotte perpendiculaire à l'axe du module d'émission d'ultrasons peut être sensiblement parallèle au premier axe (A1). Par exemple, l'angle formé par le premier axe (A1) et le troisième axe (A3) peut être compris de 0 à 15 degré(s). De préférence, l'angle formé par le premier axe (A1) et le troisième axe (A3) peut être égale à 0 degré, le premier axe (A1) et le troisième axe (A3) étant alors strictement parallèle.

Selon l'invention le deuxième axe (A2) formé par le module d'émission d'ultrasons muni perpendiculairement d'au moins une masselotte peut être sensiblement perpendiculaire au premier axe (A1). Par exemple, l'angle formé par le premier axe (A1) et le deuxième axe (A2) peut être compris de 85 à 95 degré(s). De préférence, l'angle formé par le premier axe (A1) et le deuxième axe (A2) peut être égal à 90 degrés, le premier axe (A1) et le deuxième axe (A2) étant alors strictement perpendiculaires.

Lorsque le module d'émission d'ultrasons et ladite au moins une masselotte sont liés perpendiculairement par un élément de liaison, il peut s'agir par exemple de tout élément de liaison adapté susceptible de lier un module d'émission d'ultrasons et une masselotte connu de l'homme du métier et/ou disponible dans le commerce. Selon l'invention l'élément de liaison peut être de toute taille et/ou forme adaptée pour une fixation à un module d'émission d'ultrasons et/ou à une masselotte.

Selon l'invention la taille de l'élément de liaison peut être tel qu'il permet, après fixation perpendiculaire d'un module d'émission d'ultrasons et d'au moins une masselotte un espace entre le module d'émission d'ultrasons et ladite masselotte compris de 4 à 12,5 cm.

Selon l'invention la taille de l'élément de liaison peut être fonction de la fréquence d'émission d'ultrasons. Par exemple, lorsque la fréquence d'émission d'ultrasons est de 20 kHz, la taille de l'élément de liaison peut être égale à 2 cm. Par exemple, lorsque la fréquence d'émission d'ultrasons est de 35 kHz, la taille de l'élément de liaison peut être égale à 5 cm.

Selon l'invention l'élément de liaison peut être par exemple sous une forme choisie dans le groupe comprenant un tube, un cylindre, un tube plat, un tube ondulé sur sa longueur et/ou sa largeur, un parallélépipède rectangle, un parallélépipède rectangle avec des bords arrondis. Il peut s'agir par exemple d'un l'élément de liaison choisi parmi une barre, par exemple métallique, une tige filetée. Selon l'invention l'élément de liaison peut être par exemple sous une forme choisie dans le groupe comprenant une croix, un losange, une équerre, un T.

Selon l'invention, lorsque le module d'émission d'ultrasons et ladite au moins une masselotte sont liés perpendiculairement par un élément de liaison, la forme de l'élément de liaison peut être par exemple sous une forme choisie dans le groupe comprenant une croix, un losange, une équerre, un T.

Selon l'invention, le module d'émission d'ultrasons et la masselotte peuvent être liés aux extrémités et/ou sur tout ou partie de l'élément de liaison.

Par exemple lorsque le module d'émission d'ultrasons et la masselotte sont directement liés coaxialement l'un à l'autre, ils peuvent être liés par tout élément de fixation connu adapté connu de l'homme du métier. Il peut s'agir, par exemple d'un élément de fixation mécanique ou d'une combinaison de fixation chimique et mécanique.

Par exemple lorsque le module d'émission d'ultrasons et ladite au moins une masselotte sont liés perpendiculairement l'un à l'autre, ils peuvent être liés par tout l'élément de fixation connu adapté connu de l'homme du métier. Il peut s'agir, par exemple d'un élément de fixation mécanique ou d'une combinaison de fixation chimique et mécanique.

Selon l'invention l'élément de fixation chimique peut être tout élément de fixation chimique connu de l'homme du métier et/ou disponible dans le commerce. Il peut s'agir par exemple d'une soudure.

Selon l'invention l'élément de fixation mécanique peut être tout élément de fixation mécanique adapté connu de l'homme du métier et/ou disponible dans le commerce. Il peut s'agir par exemple d'un ou plusieurs plot(s), d'une ou plusieurs quille(s) d'ancrage et/ou de vis.

Selon l'invention, l'élément de fixation peut être situé sur une surface externe du module d'émission d'ultrasons et/ou de la masselotte. Par exemple, le ciment et/ou plot et/ou quille d'encrage et/ou vis peuvent être situés sur une surface externe du module d'émission d'ultrasons pour son agencement complémentaire direct ou indirect sur une surface de la masselotte faisant face. Par exemple, dans le cas d'une fixation mécanique, une surface externe du module d'émission d'ultrasons et/ou de la masselotte peut comprendre au moins un plot d'ancrage et/ou une vis type tige filetée pour fixation complémentaire avec une surface faisant face de la masselotte et/ou du module d'émission d'ultrasons. Selon l'invention, le plot d'ancrage peut être tout plot connu de l'homme du métier adapté. Il peut s'agir par exemple d'au moins un plot et/ou au moins une quille de forme circulaire, ovale, quadrangulaire. Il peut s'agir par exemple de plot et/ou de quille avec un diamètre supérieur ou égal au diamètre du module. Il peut s'agir par exemple de plot et/ou de quille avec une hauteur à partir de la surface interne concave supérieur ou égale à 0,6 fois le diamètre du module de filtration, par exemple compris de 2 à 5 cm.

Selon l'invention, le module d'émission d'ultrasons peut être lié à l'élément de liaison par tout élément de fixation connu adapté connu de l'homme du métier. Par exemple, l'élément de fixation peut être situé sur une surface externe du module d'émission d'ultrasons et/ou de l'élément de liaison. Par exemple, le ciment et/ou plot et/ou quille d'encrage et/ou vis peuvent être situés sur une surface externe du module d'émission d'ultrasons pour son agencement complémentaire direct ou indirect sur une surface de l'élément de liaison faisant face. Par exemple, dans le cas d'une fixation mécanique, une surface externe du module d'émission d'ultrasons et/ou de l'élément de liaison peut comprendre au moins un plot d'ancrage et/ou une vis type tige filetée pour fixation complémentaire avec une surface faisant face de l'élément de liaison et/ou du module d'émission d'ultrasons. Le plot d'ancrage peut être tout plot connu de l'homme du métier adapté. Il peut s'agir par exemple d'au moins un plot et/ou au moins une quille de forme circulaire, ovale, quadrangulaire.

Selon l'invention, la masselotte peut être liée à l'élément de liaison par tout élément de fixation connu adapté connu de l'homme du métier. Par exemple, l'élément de fixation peut être situé sur une surface externe de la masselotte et/ou de l'élément de liaison. Par exemple, le ciment et/ou plot et/ou quille d'encrage et/ou vis peuvent être situés sur une surface externe de la masselotte pour son agencement complémentaire direct ou indirect sur une surface de l'élément de liaison faisant face. Par exemple, dans le cas d'une fixation mécanique, une surface externe de la masselotte et/ou de l'élément de liaison peut comprendre au moins un plot d'ancrage et/ou une vis type tige filetée pour fixation complémentaire avec une surface faisant face de l'élément de liaison et/ou de la masselotte. Le plot d'ancrage peut être tout plot connu de l'homme du métier adapté. Il peut s'agir par exemple d'au moins un plot et/ou au moins une quille de forme circulaire, ovale, quadrangulaire.

Selon l'invention, lorsque le module d'émission d'ultrasons est muni perpendiculairement de deux masselottes, la forme de l'élément de liaison peut être par exemple sous une forme choisie dans le groupe comprenant une croix, un losange.

Selon l'invention, lorsque le module d'émission d'ultrasons est muni perpendiculairement de deux masselottes, le module d'émission d'ultrasons et lesdites masselottes peuvent être liés aux extrémités ou aux sommets de l'élément de liaison, lesdites deux masselottes s'étendant coaxialement.

Selon l'invention, le module d'émission d'ultrasons (US) muni coaxialement d'une masselotte (P) selon le deuxième axe (A2) peut être fixé distant au module de filtration par un moyen de fixation (MF).

Selon l'invention, le module d'émission d'ultrasons (US) muni perpendiculairement d'au moins une masselotte (P) selon le troisiéme axe (A3) peut être fixé distant au module de filtration par un moyen de fixation (MF).

Dans la présente par moyen de fixation on entend tout moyen de fixation connu de l'homme du métier adapté à une fixation distant d'une masselotte à un module de filtration. Il peut s'agir par exemple de tout moyen de fixation disponible dans le commerce adapté à une fixation distant d'une masselotte à un module de filtration.

Selon l'invention le moyen de fixation (MF) peut être de toute taille et/ou forme adaptée pour une fixation distante du module d'émission d'ultrasons (US) muni coaxialement d'une masselotte (P) au module de filtration.

Selon l'invention le moyen de fixation (MF) peut être de toute taille et/ou forme adaptée pour une fixation distante du module d'émission d'ultrasons (US) muni perpendiculairement d'au moins une masselotte (P) au module de filtration.

Selon l'invention la taille et/ou forme du moyen de fixation peut être tel qu'il permet, après fixation du module d'émission d'ultrasons muni coaxialement d'une masselotte (P) au module de filtration, un espace entre le module d'émission d'ultrasons muni coaxialement d'une masselotte (P) et le module de filtration supérieur ou égale à 2 cm.

Selon l'invention la taille et/ou forme du moyen de fixation peut être tel qu'il permet, après fixation du module d'émission d'ultrasons muni perpendiculairement d'au moins une masselotte (P) au module de filtration, un espace entre le module d'émission d'ultrasons muni perpendiculairement d'au moins une masselotte (P) et le module de filtration supérieur ou égale à 2 cm.

Selon l'invention la taille et/ou forme du moyen de fixation peut être tel qu'il permet un espacement, par exemple sensiblement perpendiculairement à l'axe A1 et/ou A2 entre les axes A1 et A2.

Selon l'invention la taille et/ou forme du moyen de fixation peut être tel qu'il permet un espacement, par exemple sensiblement perpendiculairement à l'axe A1 et/ou A3 entre les axes A1 et A3.

Selon l'invention le moyen de fixation peut être par exemple sous une forme choisie dans le groupe comprenant un tube, un cylindre, un tube plat, un tube ondulé sur sa longueur et/ou sa largeur, un parallélépipède rectangle, un parallélépipède rectangle avec des bords arrondis. Il peut s'agir par exemple d'un l'élément de liaison choisi parmi une barre, par exemple métallique, une tige filetée, une bride. De préférence le moyen de fixation est choisi parmi un tube, une barre.

Selon l'invention, le moyen de fixation peut être en tout matériaux adapté connue de l'homme du métier. Par exemple, le moyen de fixation peut être en acier, en inox, en titane.

Selon l'invention le moyen de fixation peut être de toute forme adaptée permettant le ceinturage du module de filtration tout en permettant de fixer distant un module d'émission d'ultrasons muni coaxialement d'une masselotte (P) ou muni perpendiculairement d'au moins une masselotte (P). Il peut s'agir par exemple d'une bride avec visserie ou bride soudée.

Selon l'invention le moyen de fixation peut être de toute forme adapté permettant une fixation directe du module de filtration tout en permettant de fixer distant un module d'émission d'ultrasons muni coaxialement d'une masselotte (P) ou muni perpendiculairement d'au moins une masselotte (P). Il peut s'agir par exemple d'une tige filetée.

Selon l'invention, lorsque le module de filtration est fixé directement au moyen de fixation, il peut être fixé à une extrémité ou sur tout ou partie de l'élément de liaison tout en permettant tout en permettant de fixer distant un module d'émission d'ultrasons muni coaxialement d'une masselotte (P) ou muni perpendiculairement d'au moins une masselotte (P).

Selon l'invention le moyen de fixation peut être de toute forme adaptée permettant le ceinturage du module d'émission d'ultrasons muni coaxialement d'une masselotte (P) ou muni perpendiculairement d'au moins une masselotte (P). Il peut s'agir par exemple d'une bride, d'un clip.

Selon l'invention le moyen de fixation peut comprendre un moyen et/ou élément de fixation chimique et/ou physique. Il peut s'agir par exemple de tout moyen et/ou élément de fixation chimique et/ou physique connu de l'homme du métier permettant l'attachement et/ou la fixation d'un module d'émission d'ultrasons ou d'une masselotte, et/ou permettant l'attachement et/ou la fixation du module de filtration au moyen de fixation.

Selon l'invention, le moyen et/ou élément de fixation chimique peut être tout moyen et/ou élément de fixation chimique connu de l'homme du métier et/ou disponible dans le commerce. Il peut s'agir par exemple de colle polymérique, de ciment, d'une soudure, de préférence une soudure.

Par exemple, le moyen de fixation peut être fixé par fixation chimique, par exemple par soudure, à la surface externe du module de filtration.

Selon l'invention, le moyen et/ou élément de fixation mécanique peut être tout élément de fixation mécanique adapté connu de l'homme du métier et/ou disponible dans le commerce. Il peut s'agir par exemple d'un ou plusieurs plot(s), d'une ou plusieurs quille(s) d'ancrage, d'une tige filetée et/ou de vis.

Par exemple, lorsque le moyen et/ou élément de fixation comprend une fixation mécanique, la surface externe du module d'émission d'ultrasons ou d'une masselotte peut comprendre au moins une tige filetée complémentaire à au moins un pas de vis présent sur le moyen de fixation pour, par exemple fixation du module d'émission ou de la masselotte au moyen de fixation.

Selon l'invention, la tige filetée peut être toute tige filetée connue de l'homme du métier adapté. Il peut s'agir par exemple d'au moins une tige filetée de forme circulaire, ovale. Il peut s'agir par exemple une tige filetée avec un diamètre compris de 5 mm à 2 cm de diamètre, par exemple de 5 mm à 1 cm. Il peut s'agir par exemple tige filetée avec une hauteur à partir de la surface externe comprise de 10 mm à 2 cm.

Selon l'invention, lorsque le module d'émission d'ultrasons muni coaxialement d'une masselotte (P) est fixé directement au moyen de fixation, il peut être fixé à une extrémité ou sur tout ou partie de l'élément de liaison tout en permettant de fixer distant un module de filtration.

Selon l'invention, lorsque le module d'émission d'ultrasons muni perpendiculairement d'au moins une masselotte (P) est fixé au moyen de fixation, il peut être fixé à une extrémité ou sur tout ou partie du moyen de liaison tout en permettant de fixer distant un module de filtration.

L'homme du métier de par ses connaissances générales, saura adapter le moyen de fixation et/ou choisir le moyen de fixation adapté en fonction du module de filtration et/ou du module d'émission d'ultrasons muni coaxialement d'une masselotte (P).

L'homme du métier de par ses connaissances générales, saura adapter le moyen de fixation et/ou choisir le moyen de fixation adapté en fonction du module de filtration et/ou du module d'émission d'ultrasons muni perpendiculairement d'au moins une masselotte (P).

Par exemple, lorsque le moyen et/ou élément de fixation comprend une fixation mécanique, la surface externe du module d'émission d'ultrasons ou d'une masselotte peut comprendre au moins une tige filetée complémentaire à au moins un pas de vis présent sur le moyen de fixation pour, par exemple fixation du module d'émission ou de la masselotte au moyen de fixation.

Par exemple, lorsque la surface externe du module de filtration est acier, en inox ou en titane, le moyen de fixation peut être fixé au module de filtration par fixation chimique, par exemple par soudure du moyen de fixation à la surface du module de filtration.

Selon l'invention, le moyen de fixation (MF) peut former un pont (X) entre le module de filtration et le module d'émission d'ultrasons muni coaxialement de la masselotte (P) ou muni perpendiculairement d'au moins une masselotte (P1, P2).

Selon l'invention, le pont (X) formé entre le module de filtration et le module d'émission d'ultrasons muni coaxialement de la masselotte ou muni perpendiculairement d'au moins une masselotte (P) peut varier en fonction du module.

Selon l'invention, la longueur du pont (X) formé entre le module de filtration et le module d'émission d'ultrasons muni coaxialement de la masselotte ou muni perpendiculairement d'au moins une masselotte (P) peut être fonction de la fréquence d'émission d'ultrasons.

Selon l'invention, la longueur du pont (X) formé entre le module de filtration et le module d'émission d'ultrasons muni coaxialement de la masselotte ou muni perpendiculairement d'au moins une masselotte (P) peut être fonction du poids du module de filtration et/ou du module d'émission d'ultrason.

Selon l'invention, l'épaisseur du pont (X) formé entre le module de filtration et le module d'émission d'ultrasons muni coaxialement de la masselotte ou muni perpendiculairement d'au moins une masselotte (P) peut être fonction de la fréquence d'émission d'ultrasons.

Selon l'invention, l'épaisseur du pont (X) formé entre le module de filtration et le module d'émission d'ultrasons muni coaxialement de la masselotte ou muni perpendiculairement d'au moins une masselotte (P) peut être fonction du poids du module de filtration et/ou du module d'émission d'ultrason.

L'homme du métier de par ses connaissances générales, saura adapter la longueur et/ou l'épaisseur pont (X) et/ou choisir la longueur et/ou l'épaisseur pont (X) adapté en fonction du module de filtration et/ou du module d'émission d'ultrasons muni coaxialement d'une masselotte (P) ou muni perpendiculairement d'au moins une masselotte (P).

Selon l'invention, le moyen de fixation (MF) peut former un pont (X), le pont formant un angle compris de 90 à 105°, de préférence de 90° par rapport au premier et / ou au deuxième axe, de préférence par rapport aux deux axes (A1, A2).

Selon l'invention, le moyen de fixation (MF) peut former un pont (X), le pont formant un angle compris de 90 à 105°, de préférence de 90° par rapport au premier et/ou troisième axe, de préférence par rapport aux deux axes A1 et A3.

Selon l'invention, le moyen de fixation (MF) peut être fixé en tout point le long du module de filtration selon le premier axe (A1). Par exemple le moyen de fixation F peut être fixé au module de filtration entre le tiers et les deux tiers de la longueur du module de filtration selon le premier axe A1.

Selon l'invention, le moyen de fixation (MF) peut être fixé en tout point au module d'émission d'ultrason ou à la masselotte selon le second axe (A2). Par exemple le moyen de fixation peut être fixé au module de d'émission d'ultrason ou à la masselotte entre le tiers et les deux tiers selon le second axe A2.

Selon l'invention, le moyen de fixation (MF) peut être fixé en tout point à ladite au moins une masselotte, ou audites deux masselottes coaxiales, selon le troisième axe (A3). Par exemple le moyen de fixation peut être fixé à ladite au moins une masselotte, ou audites deux masselottes coaxiales entre le tiers et les deux tiers, de préférence la moitié, de la longueur selon le troisième axe A3.

Selon l'invention, le module de filtration, le moyen de fixation, et le module d'émission d'ultrasons muni coaxialement de sa masselotte peuvent former une seule pièce. Il peut s'agir par exemple d'une pièce moulée comprenant deux axes et un pont reliant les deux axes, un des deux axes comprenant un module de filtration et l'autre axe un module d'émission d'ultrasons et coaxialement une masse.

Selon l'invention, le moyen de fixation (MF) peut être fixé en tout point à l'élément de liaison (EL).

Avantageusement, les inventeurs ont démontré que le module de filtration et le module d'ultrasons muni de son poids entrent en résonnance via le moyen de fixation lorsque le module d'émission d'ultrasons émet des ultrasons.

Avantageusement, les inventeurs ont démontré que le dispositif selon l'invention peut être utilisé et/ou installé et/ou adapté sur des dispositifs de filtration et/ou dans des installations existantes. En d'autres termes, le dispositif selon l'invention peut être utilisé en remplacement et/ou complément au dispositif de filtration usuel. En outre, les inventeurs ont démontré que le dispositif selon l'invention permet une augmentation de performances de filtration d'au moins 20%, permettant avantageusement un meilleur rendement de filtration et/ou de réduire, par exemple d'une valeur identique la surface de membrane, permettant avantageusement de réduire les coûts des dispositifs de filtration.

D'autres avantages pourront encore apparaître à l'homme du métier à la lecture des exemples ci-dessous, illustrés par les figures annexées, donnés à titre illustratif.

### Brève description des figures

La figure 1 est une vue transversale d'un module de filtration.

La figure 2 est une vue en perspective d'un mode de réalisation d'un dispositif de filtration (D).

Les figures 3A et 3B sont des représentations schématiques en perspective d'un exemple de réalisation d'un moyen de fixation (MF), selon deux angles de vue.

La figure 4 est une vue en perspective d'un mode de réalisation du dispositif de filtration (D) comportant le moyen de fixation (MF) des figures 3A et 3B.

La figure 5 est une vue en perspective d'un autre moyen de fixation (MF) fixé au module de filtration.

La figure 6 est une vue latérale d'un dispositif de filtration (D) de la figure 2.

Les figures 7A et 7B sont deux vues schématiques d'un module de filtration selon l'invention lors de la mise en œuvre illustrant la propagation des ultrasons le long de la colonne de filtration.

Les figures 8A et 8B sont deux vues schématiques en perspective d'un tronçon de modules de filtration comprenant une membrane céramique (MC).

La figure 9 est un diagramme représentant le flux de perméation en fonction du temps, de l'application ou non d'ultrasons et de leurs puissances. Sur le diagramme, l'ordonné correspond au flux de perméation en Litre par heure par mètre carré ($L.h^{-1}.m^{-2}$) et l'abscisse le temps en minutes (min).

La figure 10 est un diagramme représentant le flux de perméation en fonction du temps, de l'application ou non d'ultrasons et de la pression transmembranaire. Sur le diagramme, l'ordonné correspond au flux de perméation en Litre par heure par mètre carré ($L.h^{-1}.m^{-2}$) et l'abscisse le temps en minutes (min).

La figure 11 est un diagramme représentant le flux de perméation en fonction du temps, de l'application ou non d'ultrasons et du mode d'émission des ultrasons : continu (bandes gris foncées) ou pulsé (bande grises claires à environ 130-140 min et 160-170 min). Sur le diagramme, l'ordonné correspond au flux de perméation en Litre par heure par mètre carré ($L.h^{-1}.m^{-2}$) et l'abscisse le temps en minutes (min).

La figure 12 est un histogramme représentant le taux de rétention sans ultrasons (NO US), ou avec des ultrasons (V1.0 et V2.0 sont 2 versions de modules ultrasons étudiées).

La figure 13 est une vue de face d'un mode de réalisation d'un dispositif de filtration (D) comportant deux masselottes (P1, P2) agencées selon un troisième axe (A3) perpendiculaire au deuxième axe (A2) du module d'émission d'ultrasons (US).

### Exemples

### Exemple 1 : Exemple d'un dispositif de filtration (D) de liquides selon l'invention

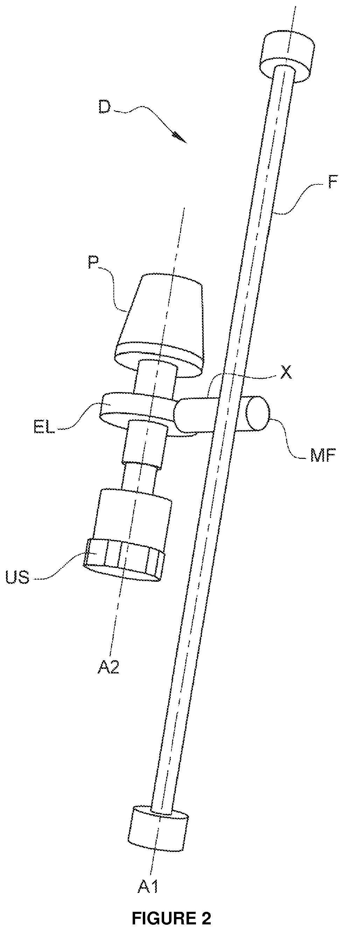

Un exemple de dispositif de filtration selon l'invention est représenté sur la figure 2 annexée. Sur cette figure, un module de filtration tubulaire (F) s'étend selon un premier axe (A1). Une barre correspondant à un moyen de fixation (MF) est fixée sur le module de filtration (F) au milieu de la longueur du module tubulaire selon l'axe A1. Un module d'émission d'ultrasons de forme tubulaire (US) est lié, coaxialement selon son axe, avec une masselotte (P) de forme conique par un élément de liaison (EL).

Le module d'émission d'ultrasons (US), lié coaxialement avec la masselotte (P) de forme conique par un élément (EL) de liaison, s'étend selon un deuxième axe (A2). Comme représenté sur la figure 2, l'élément de liaison (EL) permet le relier le module d'émission d'ultrasons et la masselotte. L'élément de liaison est relié avec la barre constituant le moyen de fixation (MF) au milieu de la longueur, selon l'axe (A2), de l'ensemble formé par le module d'émission d'ultrasons et la masselotte. Comme représenté sur cette figure, le moyen de fixation (MF) forme un pont (X) perpendiculaire entre le module de filtration et module d'émission d'ultrasons lié coaxialement avec la masselotte, et l'angle formé par les axes A1 et A2 est ici égal à 0 degré.

Le module d'émission d'ultrason est un 35kHz.

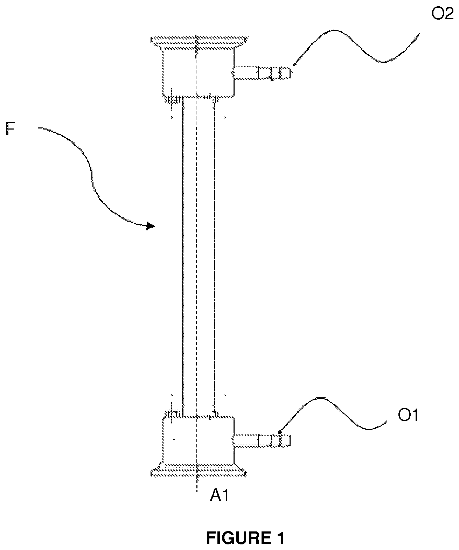

Le module de filtration est la colonne de filtration type module monocanal Tami industries. La figure 1 représente un schéma de la colonne de filtration lorsqu'elle repose sur le sol, comprenant les entrée (O2) et sortie (O1) du liquide situé aux extrémités supérieures et inférieures de la colonne de filtration.

**Exemple 2 : Exemple de dispositifs pour mettre en œuvre l'invention**

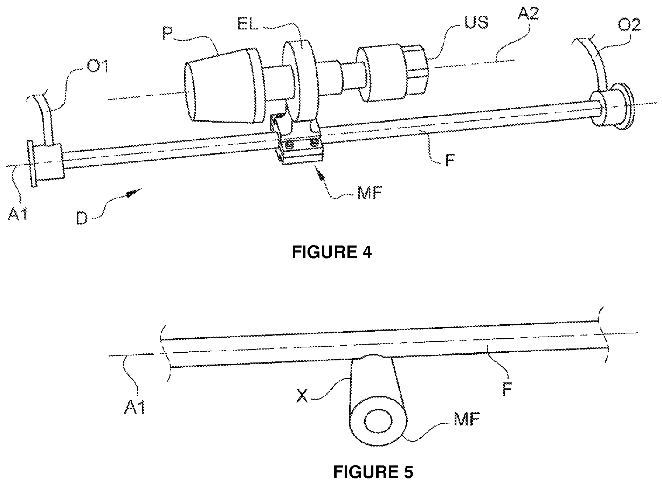

Un exemple de dispositif de filtration selon l'invention est représenté sur la figure 4 annexée. Sur cette figure, un module de filtration tubulaire (F), à savoir un module monocanal Tami industries, s'étend selon un premier axe A1. La colonne de filtration comprend une entrée (O2) pour le liquide à filtrer et une sortie (O1) du liquide filtré. Le moyen de fixation (MF) est ici une bride de fixation qui ceinture le module de filtration (F) à la moitié de la longueur du module tubulaire selon l'axe (A1). Le module d'émission d'ultrasons de forme tubulaire (US), à savoir un émetteur 35kHz, est lié coaxialement à son axe (A2) avec une masselotte (P) de forme conique. Tel que représenté sur cette figure, la masselotte comprend un orifice complémentaire d'une partie du module d'émission d'ultrasons permettant le logement et la fixation directe du module d'émission d'ultrasons (US) avec la masselotte (P). Comme représenté sur la figure, la bride de fixation (MF) permet de relier, sous la forme d'un pont, la colonne de filtration (F) avec notamment la masselotte. La longueur du pont formé par la bride est de 5 cm. Par ailleurs, le pont formé est un pont perpendiculaire entre le module de filtration et module d'émission d'ultrasons lié coaxialement avec la masselotte et l'angle formé par les axes (A1) et (A2) est ici égale à 0 degré.

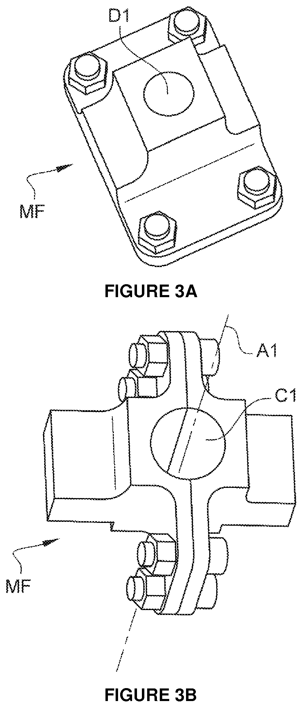

La figure 3A illustre la surface de la bride faisant face à la masselotte et comprenant un orifice (D1) dans lequel vient se visser l'élément de liaison (EL) de la masselotte pour sa fixation mécanique. La figure 3B illustre la bride de fixation en représentant un orifice (C1) dans lequel, après installation, la colonne de filtration est ceinturée, le diamètre de l'orifice C1 étant identique au diamètre de la colonne tubulaire de filtration (F).

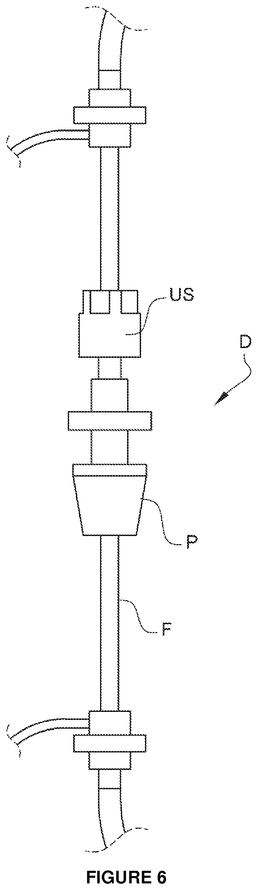

La figure 6 est une représentation schématique selon l'axe formé par le pont (X) d'un exemple de dispositif de filtration comprenant au premier plan l'émetteur à ultrason (US) lié avec la masselotte (P) et, au second plan, la colonne de filtration (F).

La figure 5 est un autre exemple de la conception du moyen de fixation (MF) entre la colonne de filtration (F) et le module d'émission d'ultrasons et/ou la masselotte. Le moyen de fixation (MF) est ici un tube plein en acier comprenant un orifice central selon l'axe longitudinal complémentaire d'une tige filetée permettant une fixation mécanique du module d'émission d'ultrasons et/ou la masselotte. Le moyen de fixation (MF) est fixé sur la colonne (F) par fixation chimique, à savoir par soudure du tube sur la colonne. L'angle formé par l'axe longitudinal du moyen de fixation et l'axe longitudinal de la colonne est égale à 90 degrés.

**Exemple 3 : Filtration d'un liquide avec un exemple de dispositif selon l'invention**

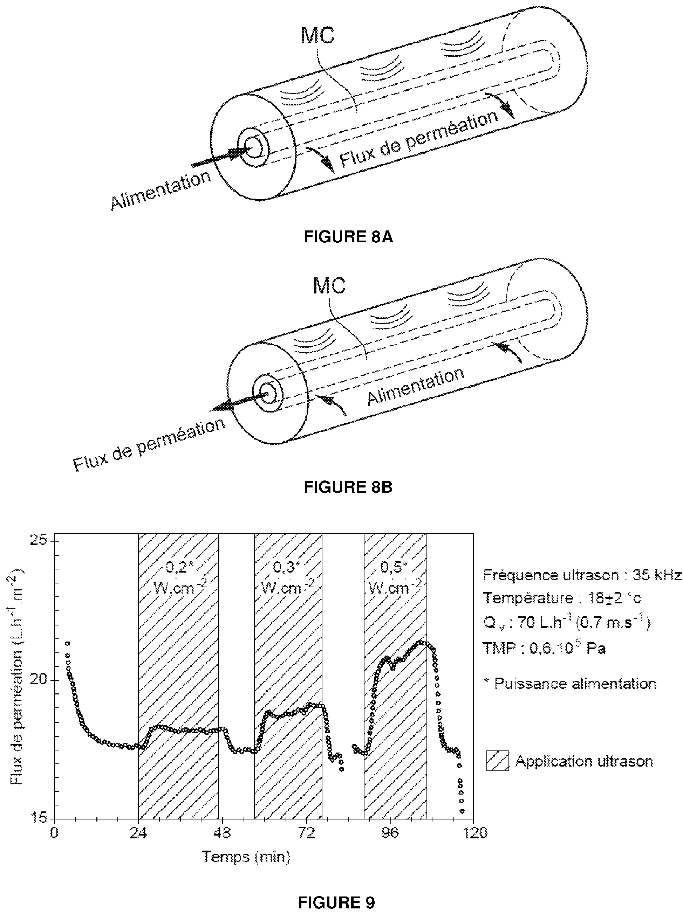

Dans cet exemple, le dispositif de filtration (D) correspond à celui de la figure 2 comprenant notamment un module de filtration tubulaire F, à savoir un module membranaire pouvant filtrer des volumes supérieurs à 10 litres de solutions de nanocristaux de cellulose et un module de filtration céramique monocanal de 60 cm de long. Le module de filtration utilisé est illustré sur la figure 8A représentant en perspective d'un tronçon d'un module de filtration comprenant une membrane céramique (MC), les ultrasons émis et le sens d'écoulement du liquide à filtrer. Dans le présent exemple, comme représenté sur la figure 8A, le sens de perméation, ou sens d'écoulement du liquide à filtrer s'effectue de l'intérieur de la membrane céramique (MC), vers l'extérieur. Dans un autre mode de réalisation, il peut être utilisé un module de filtration comme illustré sur la figure 8B représentant en perspective d'un tronçon d'un module de filtration comprenant une membrane céramique (MC), les ultrasons émis et le sens d'écoulement du liquide à filtrer, dans lequel le sens de perméation ou sens d'écoulement du liquide, peut s'effectuer de l'extérieur de la membrane céramique (MC) vers l'intérieur.

Le module de filtration a été mis en vibration contrôlée (mode continu ou pulsé) un module commercial sous 2 fréquences 25 et 35 kHz via le couplage avec le moyen de fixation illustré sur la figure 3 ou illustré sur la figure 5, le module d'émission d'ultrasons (US) était de forme tubulaire lié coaxialement avec une masselotte (P) de forme sensiblement conique / tronc conique tel que représenté sur la figure 2.

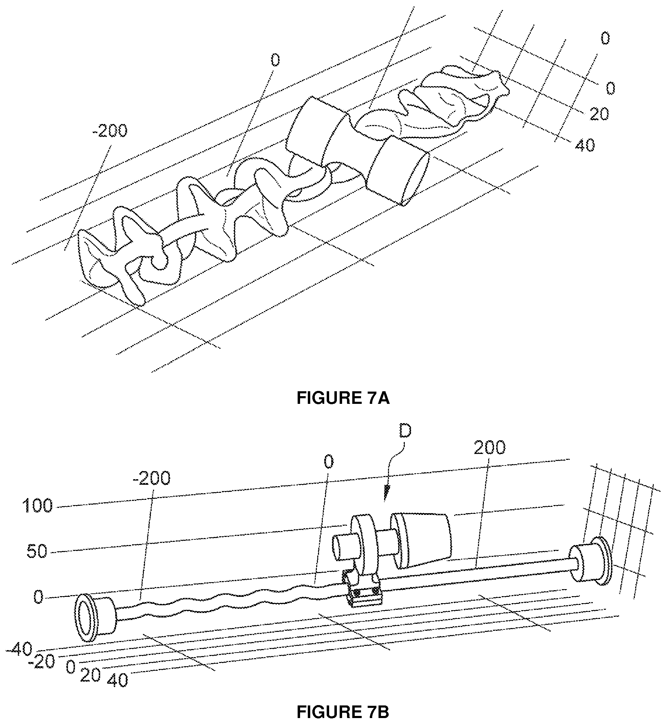

L'émission des ultrasons a donc permis de mettre en vibration contrôlée le module de filtration tel que représenté sur la figure 7 représentant et illustrant la vibration du module de filtration sous l'effet des ultrasons. Tel que représenté sur les figures 7 A et B, lors de l'application d"ultrasons sous une fréquence de 35kHz, une amplitude de vibration de 60% a été obtenue, permettant avantageusement une augmentation du flux de perméation de 23%.

Par ailleurs une évaluation de la filtration et essais comparatifs avec un exemple de dispositif selon l'invention ont été réalisés. Les dispositifs utilisés correspondaient à ceux mentionnés ci-dessus.

La filtration a été réalisée à une température de 18±2°C, la fréquence des ultrasons appliqués était de 35 kHz, le débit entrant Qv était de 70 Litres par heure (L.h$^{-1}$).

La solution utilisée pour la filtration comprenant une concentration de nanocristaux de cellulose égale à 0,7% en masse par rapport au poids total de la solution.

L'évaluation de la filtration a été effectuée par mesure du flux de perméation. Pour ce faire, une acquisition de la masse du perméat au cours du temps avec une balance KERN PCB 2000, qui transmet les données à un ordinateur via le contrôle d'un logiciel d'acquisition a permis de déterminer le débit de perméation en Kg/h et ensuite en L/h.

A l'aide de l'équation suivante, le flux de perméation/permeat J a été déterminé :

$$J = \frac{Q_p}{S}$$

- $J$ : flux de perméat (L.h$^{-1}$.m$^{-2}$)
- $Q_p$: Débit volumique de perméat (L.h$^{-1}$)
- $S$ : surface membranaire (m$^2$)

La figure 9 est un diagramme représentant le flux de perméation (L.h$^{-1}$.m$^{-2}$) en fonction du temps en fonction de l'application ou non d'ultrasons et de la puissance appliquée. La pression transmembranaire était de 0,6x10$^5$ Pa. Les puissances des ultrasons appliquées étaient respectivement de 0,2, 0,3 ou 0,5 W.cm$^{-2}$. Les ultrasons, lorsqu'ils ont été appliqués, leur émission était continue. Tels que représenté sur cette figure, lors de l'application d'ultrasons, quelle que soit la puissance appliquée, le flux de perméation augmente lors de l'application des ultrasons. La plus forte augmentation apparaît pour la puissance forte puissance.

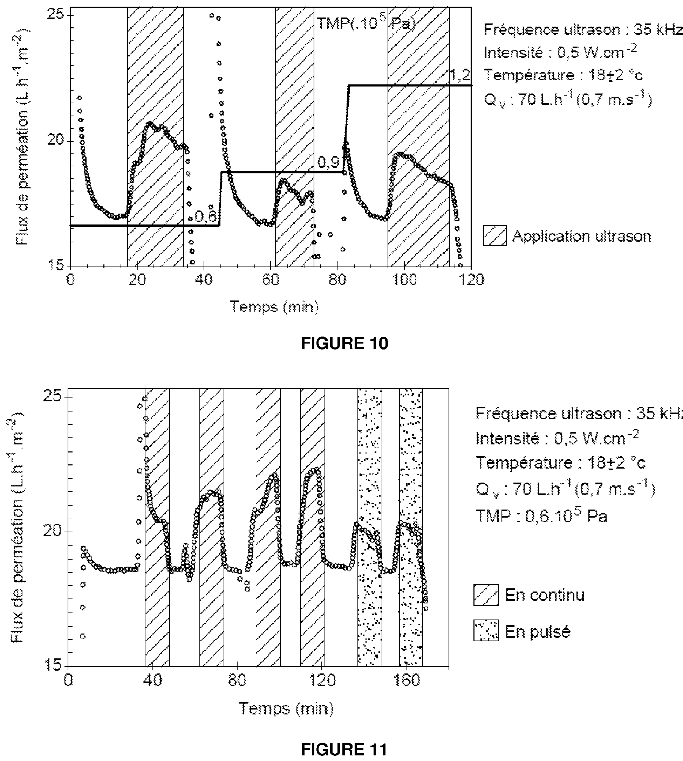

La figure 10 est un diagramme représentant le flux de perméation (L.h$^{-1}$.m$^{-2}$) en fonction du temps en fonction de l'application ou non d'ultrasons et de la pression transmembranaire appliquée. Les pressions transmembranaires étaient de 0,6x10$^5$ Pa, 0,9x10$^5$ Pa ou 1,2x10$^5$ Pa. La puissance des ultrasons appliquée était de 0,5 W.cm$^{-2}$. Les ultrasons, lorsqu'ils ont été appliqués, leur émission était continue. Sur cette figure, la courbe en escalier représente l'évolution de la pression au cours de l'expérience. La courbe en gras représente l'évolution du flux de permeation. Sans ultrasons, il apparaît une stabilisation du flux autour de 16 - 17 L/h/m$^2$ quelle que soit la pression transmembranaire appliquée. Tels que représenté sur cette figure, lors de l'application d'ultrasons, quelle que soit la pression transmembranaire appliquée, le flux de perméation augmente lors de l'application des ultrasons. Tel que démontré sur cette figure l'utilisation d'un exemple de dispositif selon l'invention permet avantageusement d'augmenter le flux de perméation membranaire.

La figure 11 est un diagramme représentant le flux de perméation (L.h$^{-1}$.m$^{-2}$) en fonction du temps en fonction de l'application ou non d'ultrasons et du mode d'émission des ultrasons : continu (bandes gris foncées) ou pulsé (bande grises claires à 130 -140 min et 160-170 min). Lors de l'application en mode pulsé, les ultrasons étaient émis selon le cycle suivant: 20 secondes d'ultrasons puis 5 secondes de repos. La pression transmembranaire était de 0,6x10$^5$ Pa. La puissance des ultrasons appliquée était de 0,5 W.cm$^{-2}$. La courbe représente l'évolution du flux de perméation. Tels que représenté sur cette figure, lors de l'application d'ultrasons, quelle que soit le mode, le flux de perméation augmente lors de l'application des ultrasons.

Par ailleurs, une étude de l'effet éventuel des ultrasons sur la membrane a été réalisé afin de déterminer si l'application des ultrasons était susceptible altérer les propriétés des membranes. Deux exemples de dispositif selon l'invention ont été testés et différaient de par le moyen de fixation MF soit une bride qui ceinture le module de filtration à la moitié de la longueur du module tubulaire selon l'axe A1 (figure 4) ou le moyen de fixation MF fixé sur la colonne par fixation chimique, à savoir par soudure du tube sur la colonne (figure 5). Ainsi, la détermination du taux de rétention des nanocristaux de cellulose présent dans la solution selon la formule suivante :

$$TR = \left(1 - \frac{C_{per}}{C_{alim}}\right) * 100$$

dans laquelle $C_{per}$ correspond à la concentration de nanocristaux de cellulose à la sortie du module de filtration et $C_{alim}$ à la concentration de nanocristaux de cellulose initiale.

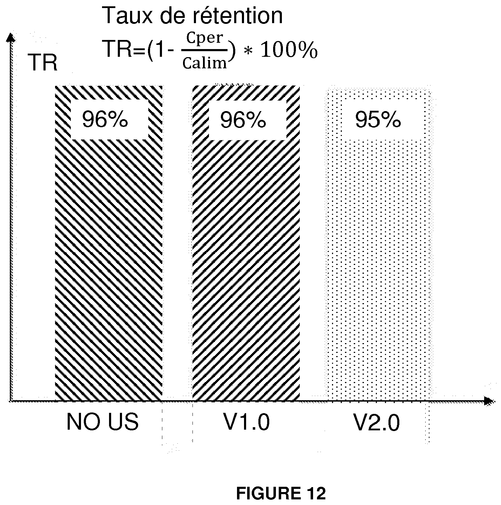

La figure 12 est un histogramme représentant le taux de rétention obtenu par des exemples de dispositif selon l'invention sans émission d'ultrasons (NO US), ou avec émission d'ultrasons avec des exemples de dispositif selon l'invention comprenant le moyen de fixation MF, à savoir une bride représentée sur la figure 3 (V1.0) ou le moyen de fixation MF représente sur la figure 5 (V2.0).

Tel que représenté sur la figure, l'application d'ultrasons est sans effet significatif sur le taux de rétention de la membrane confirmant que sa structure ou couche sélective n'est pas altérée et/ou modifiée par les ultrasons.

Cet exemple démontre donc clairement que le dispositif permet avantageusement d'augmenter significativement les rendements de filtrations de module de filtration, par exemple de nanocristaux de cellulose, et avantageusement sans modification de la structure de ceux-ci.

En outre, cet exemple démontre que le dispositif présente des propriétés et capacités de filtrations améliorées par rapport aux dispositifs connus, permet avantageusement de pouvoir réduire la surface des membranes filtrantes et/ou leurs nombres, par exemple d'au moins 25%, tout en conservant la même efficacité de filtration et/ou un rendement identique et/ou une efficacité et/ou rendement de filtration stable et homogène dans le temps.

### Exemple 4 : Autre exemple d'un dispositif de filtration (D) de liquides selon l'invention

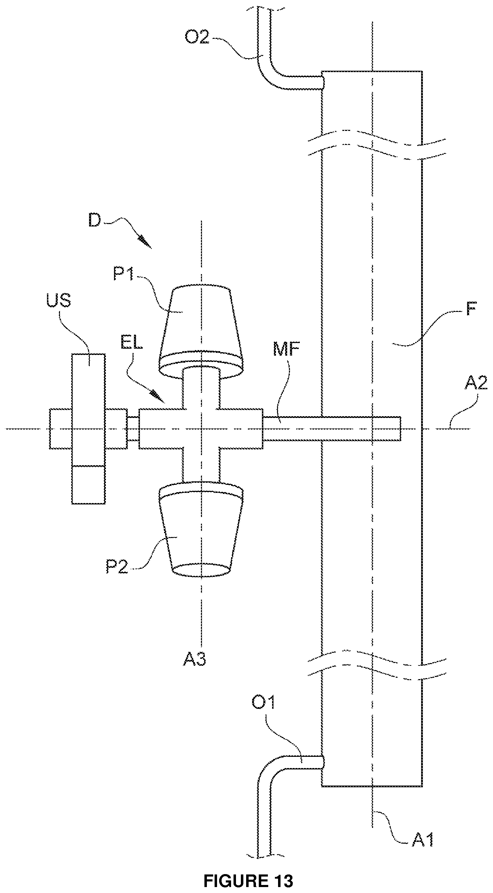

Un autre exemple de conception d'un dispositif de filtration (D) selon l'invention est représenté sur la figure 13.

Sur cette figure, un module de filtration tubulaire (F) s'étend selon un premier axe (A1). Le module de filtration (F) est ici un module commercial Kleansep (marque déposée) 7 membranes (Novasep, longueur 1178mm, 80 de diamètre). La colonne de filtration comprend une entrée (O2) pour le liquide à filtrer et une sortie (O1) du liquide filtré. Une barre correspondant à un moyen de fixation (MF) est fixée sur le module de filtration au milieu de la longueur du module tubulaire selon l'axe A1. Le module d'émission d'ultrasons (US) est lié, perpendiculairement à son axe (A2), avec deux masselottes opposées (P1) et (P2) de forme tronconique par un élément de liaison (EL) qui est ici en forme générale d'une croix ou d'une étoile à quatre branches réparties à 90 degrés d'angle. Chacune des deux masselottes (P1, P2) a un diamètre de 13 cm et une hauteur de 12,5 cm. Le poids chacune des masselottes est de 3 Kg. Les masselottes (P1) et (P2) s'étendent et sont alignées selon un troisième axe (A3).

Comme représenté sur la figure 13, l'élément de liaison (EL) permet le relier le module d'émission d'ultrasons (US), l'ensemble des deux masselottes (P1 et P2) et le moyen de fixation (MF).

L'élément de liaison (EL) est relié avec la barre correspondant au moyen de fixation (MF).

Selon le deuxième axe (A2), le module d'émission d'ultrasons (US) et le moyen de fixation (MF) sont agencés axialement de part et d'autre de l'élément de liaison (EL) et des deux masselottes opposées (P1 et P2).

Les masselottes (P1) et P(2) alignées selon le troisième axe (A3) sont agencées axialement de manière opposée de part et d'autre du deuxième axe (A2).

Comme représenté sur cette figure, le moyen de fixation (MF) forme un pont entre le module de filtration (F) et les masselottes et l'angle formé par les axes (A1) et (A3) est ici égal à 0 degré.

Le moyen de fixation (MF) est fixé sur le module de filtration par soudure du moyen de fixation (MF) à la surface du module de filtration (F).

A titre d'exemple non limitatif, l'élément de liaison « en croix » est par exemple réalisé en une seule pièce par usinage ou par fonderie et il comporte deux alésages perpendiculaires permettant le montage et la fixation, pour l'un d'étendant selon l'axe (A2), du module d'émission d'ultrasons (US) et du moyen de fixation (MF) et, pour l'autre s'étendant selon l'axe (A3), des deux masselottes (P1 et P2).

Le module d'émission d'ultrason est un 20kHZ avec une puissance maxi 1500 w.

Le module de filtration est la colonne Module commercial Kleansep (marque déposée) 7 membranes (Novasep, longueur 1178mm, 80 mm de diamètre), comprenant des membranes BX de micro et ultrafiltration, diamètre 25 mm.

### Listes des références

1. Okahata and Noguchi, ultrasound responsive permeability control of bilayer coated capsule membrane, chemistry letters, pp. 1517-1520, 1983.
2. A.L. Ahmad, N.F. Che Lah, S. Ismail, B.S. Ooi, Membrane Antifouling Methods and Alternatives: Ultrasound Approach, Sep. Purif. Rev. 41 (2012) 318-346. https://doi.org/10.1080/15422119.2011.617804.
3. Chai et al., 1999; X. Chai, T. Kobayashi, N. Fujii, Ultrasound-associated cleaning of polymeric membranes for water treatment, (1999) 139-146.
4. Gonzalez-Avila et al., Improved ultrasonic cleaning of membranes with tandem frequency excitation" Journal of Membrane Science 415-416 (2012) 776-783.
5. Mirzaie and Mohammadi, "Effect of ultrasonic waves on flux enhancement in microfiltration of milk", Journal of Food Engineering Volume 108, Issue 1, January 2012, Pages 77-86.
6. S. Muthukumaran, S.E. Kentish, G.W. Stevens, M. Ashokkumar, R. Mawson, The application of ultrasound to dairy ultrafiltration: The influence of operating conditions, J. Food Eng. 81 (2007) 364-373.
7. M.O. Lamminen, H.W. Walker, L.K. Weavers, Effect of Fouling Conditions and Cake Layer Structure on the Ultrasonic Cleaning of Ceramic Membranes, (2006) 3569.

### Revendications

**1.** Dispositif de filtration (D) de liquides, comprenant un module de filtration (F) s'étendant selon un premier axe (A1) et un module d'émission d'ultrasons (US), **caractérisé en ce que** le module d'émission d'ultrasons (US) est fixé distant au module de filtration (F) par un moyen de fixation (MF), et le module d'émission d'ultrasons (US) est muni perpendiculairement à un deuxième axe (A2) de deux masselottes (P1, P2) opposées agencées de part et d'autre du deuxième axe (A2) du module d'émission d'ultrasons (US), le module d'émission d'ultrasons et la masselotte étant liés l'un à l'autre par un élément de liaison (EL) en forme de croix, les deux masselottes s'étendant coaxialement selon un troisième axe (A3) perpendiculaire au deuxième axe (A2) du module d'émission d'ultrasons, le troisième axe (A3) étant sensiblement parallèle au premier axe (A1),
le module de filtration et le module d'ultrasons muni de ses deux masselottes (P1 , P2) entrant en résonnance via le moyen de fixation (MF) lorsque le module d'émission d'ultrasons émet des ultrasons, la fréquence d'émission des ultrasons étant comprise entre 20 et 100 kHz.

**2.** Dispositif de filtration selon la revendication 1, dans lequel le module de filtration (F) est de forme tubulaire suivant un premier axe (A1).

**3.** Dispositif de filtration selon la revendication 1, dans lequel le moyen de fixation (MF) est une bride qui d'une part ceinture le module de filtration (F) et, d'autre part, permet de fixer, distant du module de filtration (F), le module d'émission d'ultrasons (US) muni de ladite masselotte (P) ou de ladite au moins une masselotte (P1, P2).

**4.** Dispositif de filtration selon l'une quelconque des revendications 1 à 3, dans lequel le moyen de fixation comprend un moyen de fixation chimique et/ou physique.

**5.** Dispositif de filtration selon l'une quelconque des revendications 1 à 4, dans lequel le moyen de fixation (MF) est fixé au module de filtration (F) par soudure.

**6.** Dispositif de filtration selon l'une quelconque des revendications 1 à 5, dans lequel ledit module d'émission d'ultrasons (US) est fixé au moyen de fixation (MF) par un plot, une quille d'ancrage ou une ou plusieurs vis.

**7.** Dispositif de filtration selon l'une quelconque des revendications 1 à 6, dans lequel le module de filtration comprend un filtre choisi parmi un filtre céramique, une membrane polymérique en fibres creuses, une membrane céramique.

**8.** Dispositif de filtration selon l'une quelconque des revendications 1 à 7 dans lequel le module de filtration, le moyen de fixation, et le module d'émission d'ultrasons muni de sa masselotte font une seule pièce.

**Patentansprüche**

**1.** Filtervorrichtung (D) für Flüssigkeiten, umfassend ein Filtermodul (F), das sich entlang einer ersten Achse (A1) erstreckt, und ein Ultraschallemissionsmodul (US), **dadurch gekennzeichnet, dass** das Ultraschallemissionsmodul (US) durch ein Befestigungsmittel (MF) beabstandet an dem Filtermodul (F) befestigt ist und das Ultraschallemissionsmodul (US) senkrecht zu einer zweiten Achse (A2) mit zwei entgegengesetzten Gewichten (P1, P2) versehen ist, die beidseits der zweiten Achse (A2) des Ultraschallemissionsmoduls (US) angeordnet sind, wobei das Ultraschallemissionsmodul und das Gewicht durch ein kreuzförmiges Verbindungselement (EL) miteinander verbunden sind, wobei sich die beiden Gewichte koaxial entlang einer dritten Achse (A3) erstrecken, die senkrecht zu der zweiten Achse (A2) des Ultraschallemissionsmoduls verläuft, wobei die dritte Achse (A3) im Wesentlichen parallel zu der ersten Achse (A1) ist,
wobei das Filtermodul und das mit seinen beiden Gewichten (P1, P2) versehene Ultraschallmodul über das Befestigungsmittel (MF) in Resonanz gelangen, wenn das Ultraschallemissionsmodul Ultraschall emittiert, wobei die Emissionsfrequenz des Ultraschalls zwischen 20 und 100 kHz liegt.

**2.** Filtervorrichtung nach Anspruch 1, wobei das Filtermodul (F) entlang einer ersten Achse (A1) röhrenförmig ist.

**3.** Filtervorrichtung nach Anspruch 1, wobei das Befestigungsmittel (MF) ein Flansch ist, der zum einen das Filtermodul (F) umspannt und es zum anderen ermöglicht, das mit dem Gewicht (P) oder dem mindestens einen Gewicht (P1, P2) versehene Ultraschallemissionsmodul (US) beabstandet von dem Filtermodul (F) zu befestigen.

**4.** Filtervorrichtung nach einem der Ansprüche 1 bis 3, wobei das Befestigungsmittel ein chemisches und/oder physikalisches Befestigungsmittel umfasst.

**5.** Filtervorrichtung nach einem der Ansprüche 1 bis 4, wobei das Befestigungsmittel (MF) an dem Filtermodul (F) durch Schweißen befestigt ist.

**6.** Filtervorrichtung nach einem der Ansprüche 1 bis 5, wobei das Ultraschallemissionsmodul (US) an dem Befestigungsmittel (MF) durch einen Stift, einen Verankerungskiel oder eine oder mehrere Schrauben befestigt ist.

**7.** Filtervorrichtung nach einem der Ansprüche 1 bis 6, wobei das Filtermodul ein Filter umfasst, das unter einem Keramikfilter, einer Polymermembran aus Hohlfasern, einer Keramikmembran gewählt ist.

**8.** Filtervorrichtung nach einem der Ansprüche 1 bis 7, wobei das Filtermodul, das Befestigungsmittel und das mit seinem Gewicht versehene Ultraschallemissionsmodul ein einziges Teil bilden.

## Claims

1. Liquid filtration device (D), comprising a filtration module (F) extending along a first axis (A1) and an ultrasound emission module (US), **characterized in that** the ultrasound emission module (US) is fixed distant from the filtration module (F) by a fixing means (MF), and the ultrasound emission module (US) is equipped perpendicular to a second axis (A2) with two weights (P1, P2) arranged axially opposite on either side of the second axis (A2) of the ultrasound emission module (US), the ultrasound emission module and said two weights are connected to one another by a connection element (EL) in the shape of a cross, the two weights extending coaxially along a third axis (A3) perpendicular to the second axis (A2) of the ultrasound emission module (US), the third axis (A3) being substantially parallel to the first axis (A1),
the filtration module and the ultrasound module equipped with its two weights (P1, P2) going into resonance via the fixing means (MF) when the ultrasound emission module emits ultrasound, the ultrasound emission frequency being between 20 and 100 kHz.

2. Filtration device according to claim 1, wherein the filtration module (F) is tubular shaped along the first axis (A1).

3. Filtration device according to claim 1, wherein the fixing means (MF) is a flange which, on the one hand, surrounds the filtration module (F) and, on the other hand, makes it possible to fix, distant from the filtration module (F), the ultrasound emission module (US) equipped with said weight (P) or said at least one weight (P1, P2).

4. Filtration device according to one of the claims 1 to 3, wherein the fixing means comprises a chemical and/or physical fixing means.

5. Filtration device according to one of the claims 1 to 4, wherein the fixing means (MF) is fixed to the filtration module (F) by welding.

6. Filtration device according to one of the claims 1 to 5, wherein said ultrasound emission module (US) is fixed to the fixing means (MF) by a stud, an anchoring pin or one or more screws.

7. Filtration device according to one of the claims 1 to 6, wherein the filtration module comprises a filter chosen from among a ceramic filter, a hollow fiber polymeric membrane, a ceramic membrane.

8. Filtration device according to one of the claims 1 to 7, wherein the filtration module, the fixing means and the ultrasound emission module equipped with its weight form a single piece.

**FIGURE 1**

**FIGURE 2**

FIGURE 3A

FIGURE 3B

**FIGURE 4**

**FIGURE 5**

EP 4 065 256 B1

US

D

P

F

FIGURE 6

19

EP 4 065 256 B1

FIGURE 7A

FIGURE 7B

**FIGURE 8A**

**FIGURE 8B**

Fréquence ultrason : 35 kHz
Température : 18±2 °c
$Q_v$ : 70 L.h$^{-1}$(0,7 m.s$^{-1}$)
TMP : 0,6.10$^5$ Pa

$^*$ Puissance alimentation

Application ultrason

**FIGURE 9**

**FIGURE 10**

**FIGURE 11**

Taux de rétention

$$TR=(1-\frac{Cper}{Calim}) * 100\%$$

TR

| 96% | 96% | 95% |

NO US      V1.0      V2.0

FIGURE 12

**FIGURE 13**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013112620 A1
- US 2009101576 A1
- US 4253962 A
- FR 2789331 A1

**Littérature non-brevet citée dans la description**

- **OKAHATA** ; **NOGUCHI**. ultrasound responsive permeability control of bilayer coated capsule membrane. *chemistry letters*, 1983, 1517-1520
- **A.L. AHMAD** ; **N.F. CHE LAH** ; **S. ISMAIL** ; **B.S. OOI**. Membrane Antifouling Methods and Alternatives: Ultrasound Approach. *Sep. Purif. Rev.*, 2012, vol. 41, 318-346, https://doi.org/10.1080/15422119.2011.617804
- **CHAI** ; **X. CHAI** ; **T. KOBAYASHI** ; **N. FUJII et al.** *Ultrasound-associated cleaning of polymeric membranes for water treatment*, 1999, vol. 1999, 139-146
- **GONZALEZ-AVILA et al.** Improved ultrasonic cleaning of membranes with tandem frequency excitation. *Journal of Membrane Science*, 2012, vol. 415-416, 776-783
- **MIRZAIE** ; **MOHAMMADI**. Effect of ultrasonic waves on flux enhancement in microfiltration of milk. *Journal of Food Engineering*, January 2012, vol. 108 (1), 77-86
- **S. MUTHUKUMARAN** ; **S.E. KENTISH** ; **G.W. STEVENS** ; **M. ASHOKKUMAR** ; **R. MAWSON**. The application of ultrasound to dairy ultrafiltration: The influence of operating conditions. *J. Food Eng.*, 2007, vol. 81, 364-373
- **M.O. LAMMINEN** ; **H.W. WALKER** ; **L.K. WEAVERS**. *Effect of Fouling Conditions and Cake Layer Structure on the Ultrasonic Cleaning of Ceramic Membranes*, 2006, 3569